# EUROPEAN PATENT APPLICATION

(11) **EP 1 460 850 A1**
(43) Date of publication of application: **22.09.2004**
(21) Application number: 02788809.8
(22) Date of filing: 13.12.2002
(51) Int. Cl.: H04N 7/14, G06F 17/60, H04H 1/00

(54) **VIDEO INFORMATION CHARGING SYSTEM**

(30) Priority: 28.12.2001 JP 2001400120
(71) Applicant: MATSUSHITA ELECTRIC INDUSTRIAL CO., LTD., Kadoma-shi, Osaka 571-8501 (JP)
(72) Inventor: TERAO, Satoshi, Ibaraki-shi, Osaka 567-0864 (JP)
(74) Representative: Gassner, Wolfgang, Dr.
(86) International application number: PCT/JP2002/013051
(87) International publication number: WO 2003/058964

(57) **Abstract**

The present invention is a video information charging system in which a fee-requiring program is broadcast from a transmitting apparatus (11) to a receiving apparatus (13). Moreover, in the video information charging system, a communication concerning an electronic commerce transaction for a commodity that appears in the program is performed between the receiving apparatus (13) and a commerce management apparatus (14). At a program data generating section (21), a related program for making a display concerning the commodity that appears in the program and conducting an electronic commerce transaction for the commodity is acquired. A control section (33) reproduces data of the program. Moreover, the control section (33) makes the display concerning the commodity that appears in the program in accordance with an instruction from a viewer. Furthermore, the control section (33) transmits a purchase request for the commodity to the commerce management apparatus in accordance with an instruction from the viewer. A charging section (35), when calculating a charge amount for the program, discounts the charge amount to be charged for the program, based on the display concerning the commodity and the purchase request.

## Description

### TECHNICAL FIELD

The present invention relates to a video information charging system and more particularly to a video information charging system in which fee-requiring broadcasting contents provided by digital broadcasting is transmitted from a broadcasting station to a receiving apparatus.

### BACKGROUND ART

In recent years, the diversification of broadcasting has progressed due to the start of broadcasting of BS digital satellite broadcasting and the like. According to the diversification of broadcasting, various forms of business operation for a broadcaster are conceivable. One form of business operation is a form in which business operation is achieved by a viewing fee collected from a viewer. A form in which business operation is achieved by a commercial payment paid by a sponsor for broadcasting a commercial during a program is also conceivable.

Here, the form in which business operation is achieved by a viewing fee imposes a heavy financial burden on a viewer. Therefore, such a financial burden may obstruct the spread of digital broadcasting. Meanwhile, in the case of the form in which business operation is achieved by a commercial payment from a sponsor, there is a disadvantage for a viewer in that a commercial must inevitably be broadcast during a program, which may distract the viewer's interest because of the interruptions of the program by the commercial. Thus, there is a desire for a new charging system for a broadcasting fee which can reduce the financial burden on a viewer and in which broadcasting can be performed without distracting the viewer's interest.

Therefore, an object of the present invention is to provide a video information charging system which makes it possible to reduce the burden of a viewing fee without distracting a viewer' s interest.

### DISCLOSURE OF THE INVENTION

The present invention has the following features to achieve the object described above.

A first aspect of the present invention is directed to a video information charging system in which a fee-requiring program is broadcast from a transmitting apparatus to a receiving apparatus. In the video information charging system, a communication concerning an electronic commerce transaction for a commodity that appears in the program is performed between the receiving apparatus and a commerce management apparatus. The video information charging system includes a related program acquiring section, a program transmitting section, a program receiving section, a reproducing section, a related image display section, a purchase request section, and a charge management section. The related program acquiring section acquires a related program for making a display concerning the commodity that appears in the program and conducting an electronic commerce transaction for the commodity. The program transmitting section transmits the related program acquired by the related program acquiring section, the related program being included in data of the program to be broadcast, to the receiving apparatus. The program receiving section receives the data of the program transmitted from the program transmitting section. The reproducing section reproduces the data of the program received by the program receiving section. The related image display section, in accordance with an instruction from a viewer, executes the related program contained in the data of the program received by the program receiving section and thereby making a display concerning the commodity that appears in the program. The purchase request section, in accordance with an instruction from the viewer, executes the related program contained in the data of the program received by the program receiving section and thereby transmits a purchase request for the commodity displayed by the related image display section to the commerce management apparatus. The charge management section discounts a charge amount to be charged for the program when calculating the charge amount for the program, based on the display concerning the commodity displayed by the related image display section and the purchase request transmitted by the request transmitting section.

According to the first aspect, a discount on a viewing fee is made based on a display concerning a commodity (a display of related information) and a purchase request for the commodity. Here, a display of related information and a purchase request for the commodity is made by a viewer's own instruction. That is, the related information is displayed with respect to only the commodity in which the viewer becomes interested, out of the commodities that appear in a program, and thus a purchase of the commodity is made. Consequently, the viewer causes only the thing which interests him or her to be displayed by his or her own instruction, so that the viewer will never view a commercial in which he or she is not interested. Therefore, the present information charging system can reduce the burden of a viewing fee without distracting the viewer's interest.

A second aspect of the present invention is directed to a system according to the first aspect, further comprising a sponsor fee calculating section and a sponsor fee transmitting section. The sponsor fee calculating section calculates a sponsor fee based on an amount of discount applied by the charge management section. The sponsor fee transmitting section transmits data indicating the sponsor fee calculated by the sponsor fee calculating section to the commerce management apparatus.

According to the second aspect, a sponsor fee is decided based on a discount amount off a viewing fee. Note that herein a form is assumed in which a commerce company that administers the commerce management apparatus and conducts a commerce transaction with a viewer pays a sponsor fee to a broadcaster that administers the transmitting apparatus. As described above, a display concerning a commodity or a purchase request for the commodity is made only if the viewer becomes interested. Then, in such a case, a discount off a viewing fee occurs, and in accordance therewith a sponsor fee is incurred. Consequently, a sponsor fee is incurred only when the viewer becomes interested in the commodity and causes related information to be displayed. In other words, if the viewer is not interested (if a display concerning the commodity or the like is not made), the commerce company does not have to pay a sponsor fee. Therefore, considering a display of related information as an advertisement of the commodity, the commerce company has to pay a sponsor fee only when an effect of advertising is truly recognized (when the viewer is interested). As a result, according to the present aspect, the commerce company can assess the effect of advertising accurately and thus pay an appropriate fee based thereon.

A third aspect of the present invention is directed to a system according to the first aspect, further comprising a display amount calculating section and a purchase amount calculating section. The display amount calculating section calculates, as a display amount, an amount of display concerning the commodity having been made by the related image display section (for example, a period for which a display(s) has been made, the number of times a display has been made, the number of commodities of which a display has been made, and the like). The purchase amount calculating section calculates, as a purchase amount, an amount of purchase request transmitted by the request transmitting section (for example, the number of times a purchase request has been transmitted, an amount of money of a commodity for which a purchase request has been transmitted, and the like). At this time, the sponsor fee calculating section calculates a sponsor fee such that if the ratio of the purchase amount to the display amount is high, the sponsor fee becomes larger than when the ratio is low.

According to the third aspect, a commerce company can assess the effect of advertising more accurately and thus pay a more appropriate sponsor fee. For example, if many viewers, among the viewers who saw a display concerning a commodity, purchase the commodity, the aforementioned ratio becomes high. In this case, it can be said that the effect of advertising by the display concerning the commodity is high. On the other hand, if only a small number of viewers, among the viewers who saw a display of the commodity, purchase the commodity, it can be said that the effect of advertising is low. According to the present aspect, if the aforementioned ratio, that is, the effect of advertising, is high, a sponsor fee becomes large as well, so that an appropriate sponsor fee which is in accordance with the effect of advertising can be calculated. In addition, the commerce company can assess the effect of advertising more appropriately.

A fourth aspect of the present invention is directed to a system according to the first aspect, further comprising a related program storage section. The related program storage section stores the related program contained in the data of the program received by the program receiving section. At this time, the related image display section, in accordance with an instruction from the viewer, executes the related program stored in the related program storage section and thereby makes a display concerning the commodity that appears in the program. Moreover, the purchase request section, in accordance with an instruction from the viewer, executes the related program stored in the related program storage section and thereby transmits a purchase request for the commodity displayed by the related image display section to the commerce management apparatus.

According to the fourth aspect, the viewer can display information concerning a commodity with a desired timing.

A fifth aspect of the present invention is directed to a video information receiving apparatus that receives a fee-requiring program broadcast from a transmitting apparatus. The video information receiving apparatus performs a communication concerning an electronic commerce transaction for a commodity that appears in the program with a commerce management apparatus. Herein, in data of the program transmitted from the transmitting apparatus, a related program for making a display concerning the commodity that appears in the program and conducting an electronic commerce transaction for the commodity is contained. The video information receiving apparatus includes a program receiving section, a reproducing section, a related image display section, a purchase request section, and a charge management section. The program receiving section receives the data of the program transmitted from the transmitting apparatus. The reproducing section reproduces the data of the program received by the program receiving section. The related image display section, in accordance with an instruction from a viewer, executes the related program contained in the data of the program received by the program receiving section and thereby makes a display concerning the commodity that appears in the program. The purchase request section executes the related program contained in the data of the program received by the program receiving section according to an instruction of the viewer's and thereby transmits a purchase request for the commodity displayed by the related image display section to the commerce management apparatus. The charge management section discounts a charge amount to be charged for the program when calculating the charge amount for the program, based on the display concerning the commodity displayed by the related image display section and the purchase request transmitted by the request transmitting section.

A sixth aspect of the present invention is directed to a video information charge method used in a video information charging system. In this video information charging system, a fee-requiring program is broadcast from a transmitting apparatus to a receiving apparatus, and a communication concerning an electronic commerce transaction for a commodity that appears in the program is performed between the receiving apparatus and a commerce management apparatus. Moreover, the video information charge method includes a related program acquiring step, a program transmitting step, a program receiving step, a reproducing step, a related image display step, a purchase request step, and a charge management step. At the related program acquiring step, a related program for making a display concerning the commodity that appears in the program and conducting an electronic commerce transaction for the commodity is acquired. At the program transmitting step, the related program acquired at the related program acquiring step is transmitted, the related program being included in data of the program to be broadcast, to the receiving apparatus. At the program receiving step, the data of the program transmitted at the program transmitting step is received. At the reproducing step, the data of the program received at the program receiving step is reproduced. At the related image display step, in accordance with an instruction from a viewer, the related program contained in the data of the program received at the program receiving step is executed and thereby a display concerning the commodity that appears in the program is made. At the purchase request step, in accordance with an instruction from the viewer, the related program contained in the data of the program received at the program receiving step is executed and thereby a purchase request for the commodity displayed at the related image display step is transmitted to the commerce management apparatus. At the charge management step, when calculating a charge amount for the program, the charge amount to be charged for the program is discounted, based on the display concerning the commodity displayed at the related image display step and the purchase request transmitted at the request transmitting step.

### BRIEF DESCRIPTION OF THE DRAWINGS

FIG. 1 is a diagram illustrating the structure of a video information charging system according to the first embodiment of the present invention.
FIG. 2 is a block diagram illustrating the functional structure of a transmitting apparatus 11 according to the first embodiment.
FIG. 3 is a block diagram illustrating the functional structure of a receiving apparatus 13 according to the first embodiment.
FIG. 4 is a flowchart illustrating an operation of the transmitting apparatus 11 according to the first embodiment.
FIG. 5 is a flowchart illustrating an operation of the receiving apparatus 13 according to the first embodiment.
FIG. 6 is a flowchart illustrating the details of subroutine step S501 in FIG. 5.
FIG. 7 is a diagram illustrating an example of related information displayed on the output section 38 shown in FIG. 3.
FIG. 8 is a flowchart illustrating the details of subroutine step S513 in FIG. 5.
FIG. 9 is a diagram illustrating an example of charge information used in the first embodiment.
FIG. 10 is a block diagram illustrating the functional structure of the receiving apparatus 13 according to the second embodiment.
FIG. 11 is a flowchart illustrating an operation of the receiving apparatus 13 according to the second embodiment.

### BEST MODE FOR CARRYING OUT THE INVENTION

Hereinafter, various embodiments of the present invention are described with reference to the figures.

### (first embodiment)

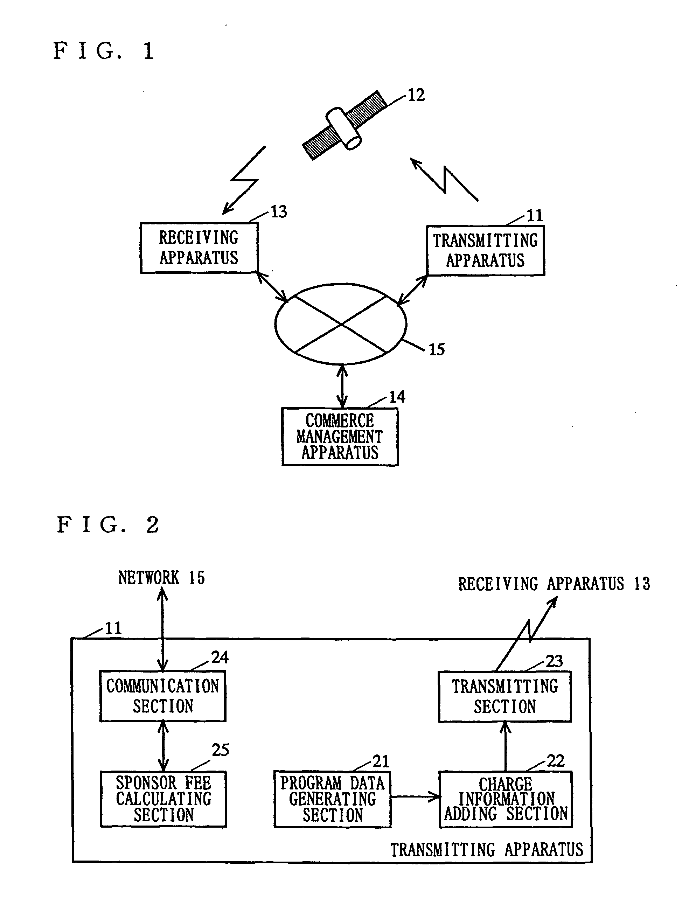

FIG. 1 is a diagram illustrating the structure of a video information charging system according to the first embodiment of the present invention. In FIG. 1, the present charging system includes a transmitting apparatus 11, a receiving apparatus 13, and a commerce management apparatus 14. The transmitting apparatus 11 transmits data of a program (a broadcasting content) to the receiving apparatus 13 via a satellite 12. Note that the form of broadcasting from the transmitting apparatus 11 to the receiving apparatus 13 is typically satellite broadcasting via a communication satellite or a commercial satellite, but it may be ground wave broadcasting or CATV broadcasting utilizing a fixed line such as a cable and the like.

The transmitting apparatus 11, the receiving apparatus 13, and the commerce management apparatus 14 are interconnected via a wireless or fixed-line network 15 so as to be communicable with one another. The transmitting apparatus 11 is placed, for example, at a broadcasting station of television broadcasting. The receiving apparatus is placed, for example, at the home of each subscriber (viewer) to the broadcasting service of the broadcasting station (in FIG. 1, only one receiving apparatus is shown). The commerce management apparatus 14 is placed at a company that deals in a commodity that appears in a program provided in the broadcasting service (hereinafter referred to as "a commerce company"). Between the receiving apparatus 13 and the commerce management apparatus 14, an electronic commerce transaction for a commodity dealt in by the commerce company is conducted.

Note that the form of business operation of the broadcaster in the present embodiment is a form in which business operation is achieved by a viewing fee from a viewer and a sponsor fee from a commerce company. That is, the viewer pays a viewing fee in compensation for the viewing of a program and the commerce company pays a sponsor fee in compensation for the transmission of information about a commodity of the company.

In the data of a program transmitted from the transmitting apparatus 11 to the receiving apparatus 13, a related information program concerning a commodity that appears in the program is embedded. The related information program, which is a program for displaying related information concerning a commodity that appears in the program and conducting an electronic commerce transaction for the commodity, is executed by the receiving apparatus 13 that received the data of the program. Here, related information means information concerning a commodity dealt in by the commerce company. The transmitting apparatus 11 receives information about a charge amount imposed as a viewing fee of the program from the receiving apparatus 13 via the network 15. In addition, the transmitting apparatus 11 calculates the sponsor fee demanded from the commerce company based on the viewing fee received from the receiving apparatus 13, and transmits the information about the calculated sponsor fee to the commerce management apparatus 14.

The receiving apparatus 13 is composed, for example, of a television receiving apparatus and a set-top box connected thereto or the like and receives the data of a program transmitted from the transmitting apparatus 11 via the satellite 12 and reproduces it. Here, a viewer can conduct an electronic commerce transaction for a commodity that appears in the program of which reproduction is being performed. At this time, the receiving apparatus 13 transmits a commodity purchase application request to the commerce management apparatus 14 via the network 15. The receiving apparatus 13, after calculating the charge amount of a viewing fee, transmits the calculated charge amount to the transmitting apparatus 11 via the network 15.

The commerce management apparatus 14 receives the commodity purchase application request from the receiving apparatus 13 via the network 15. Moreover, the commerce management apparatus 14 receives information about a sponsor fee transmitted from the transmitting apparatus 11 via the network 15.

FIG. 2 is a block diagram illustrating the functional structure of the transmitting apparatus 11 according to the first embodiment. The transmitting apparatus 11 includes a program data generating section 21, a charge information adding section 22, a transmitting section 23, a communication section 24, and a sponsor fee calculating section 25.

The program data generating section 21 generates data of a program to be broadcast. Here, in the data of a program, the aforementioned related information program is embedded. Specifically, the related information program is embedded into either image data or audio data which constitutes the data of the program. The data of the program in which the related information has been embedded is transferred to the charge information adding section 22.

The charge information adding section 22 adds charge information to the data of a program. The charge information is used for calculating a charge amount of the program and its discount amount. The data of the program to which the charge information has been added is transferred to the transmitting section 23. Hereinafter, data obtained by adding charge information to data (image data and audio data) of a program is referred to as broadcast data, in order to distinguish it from data of the program. The transmitting section 23 modulates (FM modulates) the broadcast data into broadcasting waves and transmits them to the satellite 12.

The communication section 24 receives information of the charge amount of a viewing fee transmitted from the receiving apparatus 13 and transfers it to the sponsor fee calculating section 25. The sponsor fee calculating section 25, after receiving the information of the charge amount from the communication section 24, calculates a sponsor fee to be demanded from a commerce company based on the information. The calculated sponsor fee is transmitted to the commerce management apparatus 14 via the communication section 24. Note that the communication section 24 and the sponsor fee calculating section 25 may be incorporated in a device different from a device in which the program data generating section 21, the charge information adding section 22, and the transmitting section 23 are incorporated. In this case, the device incorporating the communication section 24 and the sponsor fee calculating section 25 maybe placedat a place different from the place at which the transmitting apparatus 11 is placed.

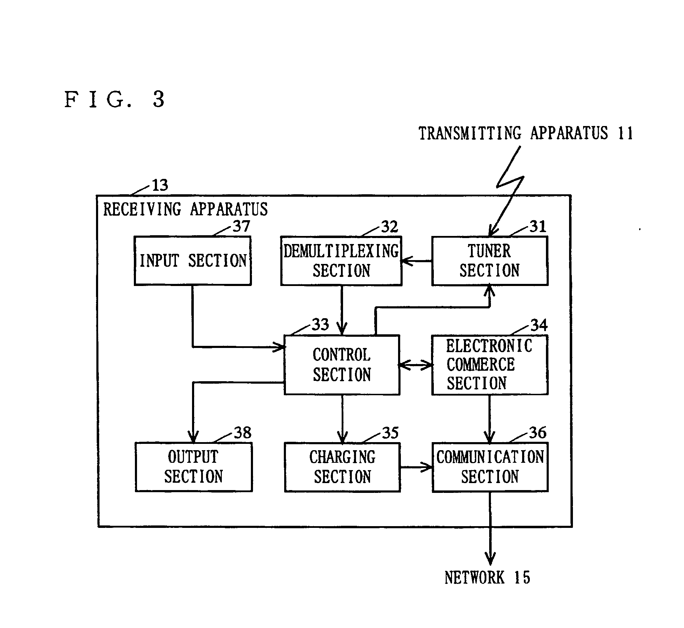

FIG. 3 is a block diagram illustrating the functional structure of the receiving apparatus 13 according to the first embodiment. The receiving apparatus 13 includes a tuner section 31, a demultiplexing section 32, a control section 33, a charging section 35, an electronic commerce section 34, a communication section 36, an input section 37, and an output section 38.

The tuner section 31 extracts broadcast data of a desired channel from broadcasting waves received by an antenna (not shown) and demodulates (FM demodulates) the data. A desired channel is selected by the control section 33, which has received a user instruction from the input section 37. The demultiplexing section 32 receives the broadcast data from the tuner section 31 and separates it into image data, audio data, and charge information. The demultiplexing section 32 transfers each separated data to the control section 33.

Next, the control section 33, the electronic commerce section 34, and the charging section 35 are described. Note that the functions of these sections are realized by a CPU of the receiving apparatus 13 executing a predetermined program.

The control section 33 controls the operations of each section necessary for reproducing data of a program transmitted from the transmitting apparatus 11 on the output section 38 or displaying related information and conducting an electronic commerce transaction. The control section 33 generates an image signal and an audio signal based on the data of a program received from the demultiplexing section 32 and reproduces them on the output section 38. Moreover, the control section 33 transfers charge information received from the demultiplexing section 32 to the charging section 35 when calculating the total charge. Moreover, the control section 33 totalizes the viewing time of the program, the display time of related information, and the number of times an electronic commerce transaction has been conducted, and transfers the results to the charging section 35 when calculating the total charge. Still further, the control section 33, after receiving the user's instruction to conduct an electronic commerce transaction from the input section 37, transfers an instruction as to a commodity purchase request toward the commerce company (the commerce management apparatus 14) to the electronic commerce section 34.

The electronic commerce section 34, after receiving an instruction from the control section 33, generates a commodity purchase request. The commodity purchase request generated in the electronic commerce section 34 is transmitted to the commerce management apparatus 14 via the communication section 36.

The charging section 35 calculates the charge amount to be transmitted to the transmitting apparatus 11. The charge amount is calculated based on the viewing time of the program, the display time of related information and the number of times an electronic commerce transaction has been conducted, while referring to the charge information. The calculated charge amount is transferred to the communication section 36.

The communication section 36, typically a modem, receives an instruction from the electronic commerce section 34 and transmits a commodity purchase application request to the commerce management apparatus 14 via the network 15. Moreover, the communication section 36 receives an instruction from the charging section 35 and transmits the charge amount to the transmitting apparatus 11.

The input section 37, typically an input device such as a remote controller and the like, accepts an operation inputted from the user. Specifically, the input section 37 detects an operation of the pressing of a key or the like by the user, generates input information in accordance with the operation, and transfers it to the control section 33. The output section 38, typically an output device such as a monitor, a speaker, and the like, outputs an image signal and an audio signal transmitted from the control section 33.

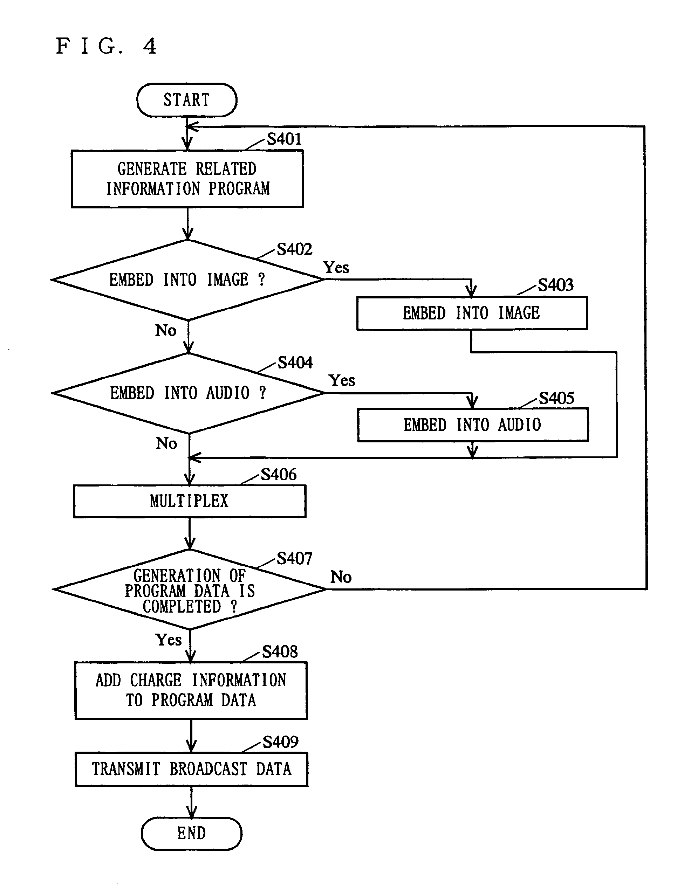

The operation of the present video information charging system constituted as above is described with reference to FIG. 4. FIG. 4 is a flowchart illustrating an operation of the transmitting apparatus 11 according to the first embodiment. First, at step S401, the program data generating section 21 acquires a related information program. The related information program to be acquired may be, for example, one which has already been stored in a storage device within the transmitting apparatus 11 or one which is stored in an external storage medium accessible from the transmitting apparatus 11.

At step S402, the program data generating section 21 determines whether the related information program should be embedded into image data. Specifically, information indicating whether it is to be embedded into image data or audio data has already been attached to the related information program, and the determination at step S402 (and S404) is made according to this information. Note that in the case where a related information program is one concerning a commodity of which the advertisement and marketing are to be conducted with an image (for example, a bag, shoes, or the like), the information attached to the related information program is one indicating that it should be embedded into image data. On the other hand, in the case where a related information program is one concerning a commodity of which the advertisement and marketing are to be conducted with an audio (for example, a music CD or the like), the information attached to the related information program is one indicating that it should be embedded into audio data.

If the determination at step S402 is affirmative, the program data generating section 21 performs the process of step S403. That is, the program data generating section 21 embeds the related information program into image data. The related information program is embedded in the form of a so-called electronic watermark or the like. In other words, the related information program is contained into the image data by varying the image data in a manner which will not be problematic to the human visual characteristics. The program data generating section 21, after completing the embedment of the related information program into the image data, transfers the image data into which the related information program was embedded to the charge information adding section 22.

On the other hand, if the determination at step S402 is negative, the program data generating section 21 performs the process of step S404. At step S404, the program data generating section 21 determines whether the related information program should be embedded into audio data. The method of determination at step S404 is the same as the method at aforementioned step S402.

If the determination at step S404 is affirmative, the program data generating section 21 performs the process of step S405. That is, the program data generating section 21 embeds the related information program into audio data. The method of embedding the related information program is the same as that at aforementioned step S403. The program data generating section 21, after completing the embedment of the related information program into audio data, transfers the audio data into which the related information program was embedded to the charge information adding section 22.

As described above, in the processes of steps S402 to S404, the embedment of the related information program into data is completed. Note that, in the present embodiment, it has been assumed that a related information program in connection with image data is embedded into image data and a related information program in connection with audio data is embedded into audio data. Here, in another embodiment, a related information program may be embedded into either, image data or audio data.

At step S406, the program data generating section 21 multiplexes a plurality of media, that is, image data and audio data. Specifically, the program data generating section 21 subjects image data and audio data to time division multiplexing and unites them as data of one program.

Following step S406, at step S407, the program data generating section 21 determines whether the generation of the data of the program has been completed. That is, the program data generating section 21 determines whether all of the related information programs have been embedded into the data of the program. The number of related information programs to be embedded for the data of one program is not necessarily one. If there are a plurality of related information programs to be embedded for the data of one program, the program data generating section 21 performs the processes of steps S401 to S407 until all of the related information programs have been embedded into the data of the program. Consequently, if the determination at step S407 is negative, the program data generating section 21 performs the processes of steps S401 to S407 again. An affirmative determination being made at step S407 means that the generation of the data of the program containing the related information program(s) has been completed.

If the determination at step S407 is affirmative, the process of step S408 is performed. Here, the program data generating section 21 transfers the data of the program of which the embedment of the related information program(s) has been completed to the charge information adding section 22. At step S408, the charge information adding section 22 adds charge information to the data of the program received from the program data generating section 21. Furthermore, the charge information adding section 22 transfers the broadcast data (data of the program to which has been added the charge information) to the transmitting section 23. At the following step S409, the transmitting section 23 modulates the broadcast data received from the charge information adding section 22 into broadcasting waves and transmits them to the satellite 12.

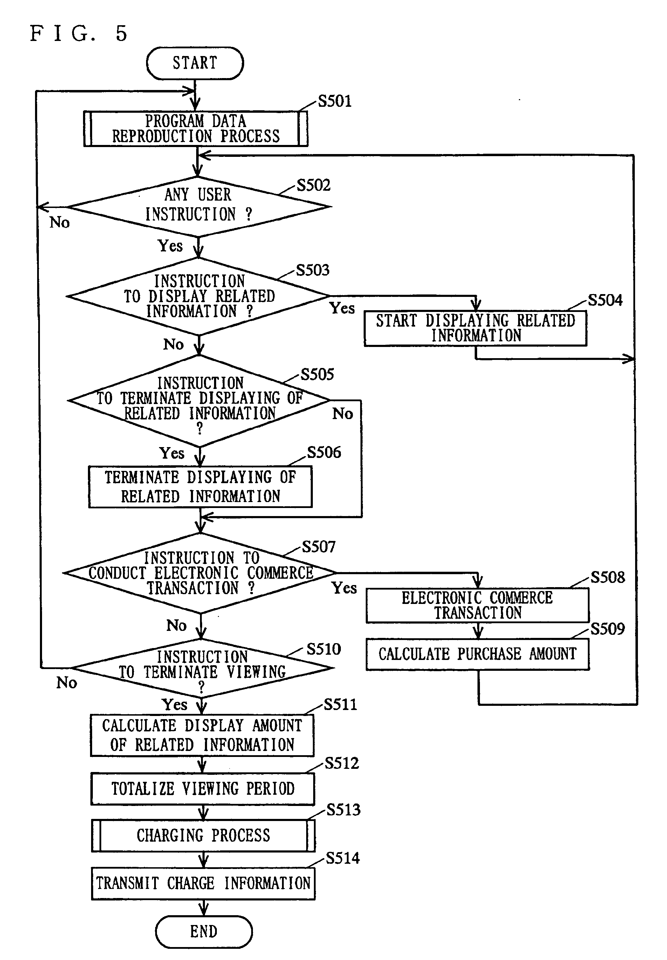

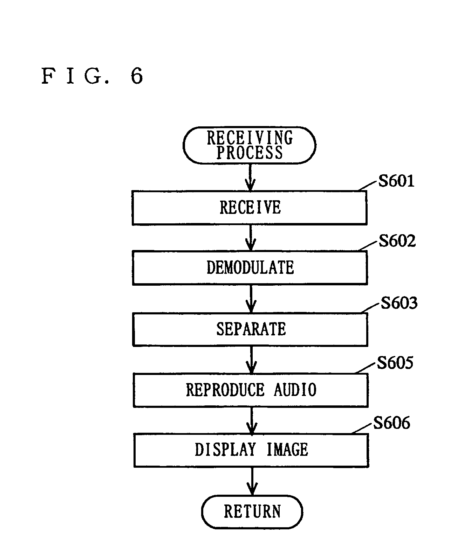

Next, with reference to the flowchart in FIG. 5, an operation in the receiving apparatus 13 is described. At step S501, the receiving apparatus 13 performs a program data reproduction process . Here, the program data reproduction process refers to a process of reproducing data of a program transmitted from the transmitting apparatus 11 via the satellite 12. With reference to FIG. 6, the program data reproduction process is described in detail below.

FIG. 6 is a flowchart illustrating the details of subroutine step S501 in FIG. 5. First, at step S601, the tuner section 31 accepts broadcasting waves received from the satellite 12 via an antenna. At the following step S602, the tuner section 31 extracts broadcast data of a channel designated by the control section 33 from the received broadcasting waves and demodulates it. The demodulated broadcast data is transferred to the demultiplexing section 32.

At step S603, the demultiplexing section 32 separates the broadcast data accepted from the tuner section 31. Specifically, the broadcast data is separated into charge information, image data, and audio data. Moreover, the related information program(s) embedded in image data or audio data are extracted from the data. Each of the separated data is transferred to the control section 33.

Following step S603, at step S604, the control section 33 performs a process of reproducing audio. Specifically, the control section 33 converts audio data accepted from the demultiplexing section 32 into an audio signal and causes the output section 38 to output the audio signal. The output section 38 reproduces the audio signal accepted from the control section 33. At the following step S605, the control section 33 performs a process of displaying an image. Specifically, the control section 33 converts image data accepted from the demultiplexing section 32 into an image signal and causes the output section 38 to display the image signal. The output section 38 displays the image signal accepted from the control section 33. By the above steps S601 to S605, the program data reproduction process is completed.

Returning to the description of FIG. 5, at step S502, the control section 33 determines whether an instruction inputted on the input section 37 by the user has been accepted. That is, the control section 33 determines whether any instruction has been inputted from the user. An input by the user is conducted, for example, by pressing a button of the remote controller, which is the input section 37. Herein, there are four types of instructions that the control section 33 may accept from the input section 37: an instruction to display related information, an instruction to terminate the displaying of related information, an instruction to purchase a commodity, and an instruction to terminate the viewing of a program.

If the determination at step S502 is negative, the control section 33, returning to step S501, performs a program data reproduction process again. On the other hand, if the determination at step S502 is affirmative, the control section 33 performs the process of step S503. At step S503, the control section 33 determines whether an instruction accepted at step S502 is an instruction to display related information. That is, it is determined whether an instruction inputted by the user is an instruction for displaying related information.

If the determination at step S503 is affirmative, the control section 33 performs the process of step S504. At step S504, the control section 33 starts the display of related information. Specifically, thecontrol section 33 executes arelatedinformation program obtained by separation at step S603 and causes related information to be displayed on the output section 38. Note that, if a plurality of related information programs have been obtained by separation at step S603, a related information program corresponding to an image or audio that is being outputted on the output section 38 at the moment is executed. The control section 33, after causing the related information to be displayed, returns to the process of step S502.

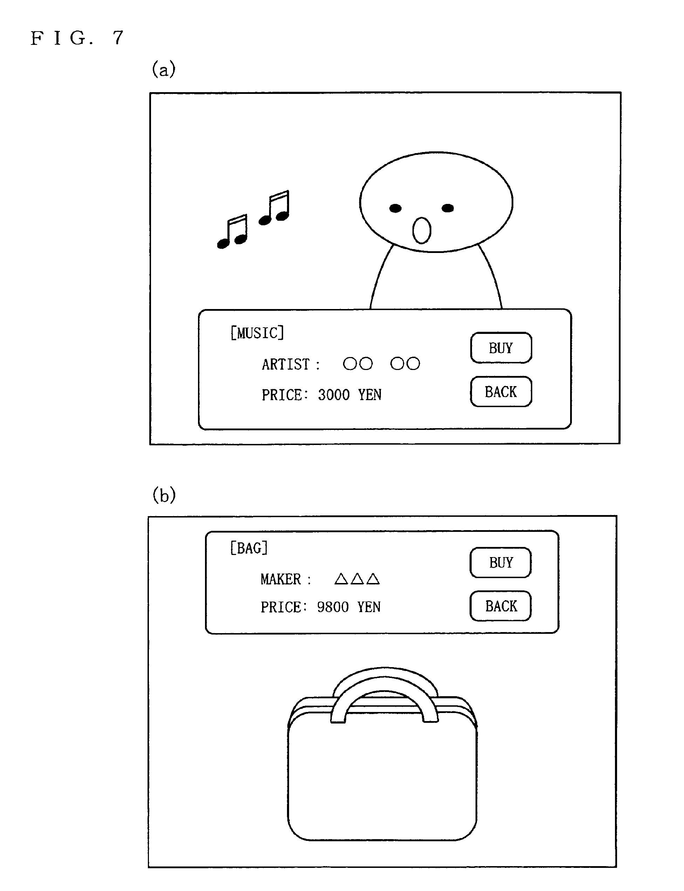

FIG. 7 is a diagram illustrating examples of the related information to be displayed on the output section 38 shown in FIG. 3. In related information, information concerning a commodity dealt in by a commerce company is included and, for example, the features, producing entity, selling price and the like of the commodity are included. FIG. 7(a) is a display example in the case where a related information program which had been embedded in audio data was executed, whereby related information has been displayed on the screen, and FIG. 7(b) is a display example in the case where a related information program which had been embedded in image data was executed, whereby related information has been displayed on the screen.

As shown in FIG. 7(a), if an operation of pressing a predetermined button of a remote controller or the like is performed by the user, related information, which had been embedded in audio data, is displayed. As the related information, information concerning an audio that is being reproduced at the moment, for example, the name of the artist who plays music or the selling price of a music CD, is displayed. In addition, in the related information window, "Buy" and "BACK" buttons are being displayed. The "Buy" button exists for transmitting a purchase request for a commodity to the commerce management apparatus 14. The "BACK" button exists for terminating a display of related information.

In FIG. 7(b), on the related information, information concerning an image that is being displayed at the moment, for example, the selling price or producing entity of a bag, is displayed. In addition, in related information window, as in FIG. 7(a), the "Buy" and "BACK" buttons are displayed.

Returning to the description of FIG. 5 again, if the determination at step S503 is negative, the control section 33 performs the process of step S505. At step S505, the control section 33 determines whether an instruction accepted at step S502 is an instruction to terminate a display of related information. That is, it is determined whether an instruction to terminate a display of related information has been given by the user. Note that an instruction to terminate a display of related information is given, for example, by selecting the "BACK" button shown in FIG. 7.

If the determination at step S505 is affirmative, the control section 33 performs the process of step S506. At step S506, the control section 33 performs the process of terminating a display of related information. The control section 33 terminates the execution of a related information program and terminates the display of the related information on the display screen. The control section 33, after terminating the display of the related information, performs the process of step S507.

On the other hand, if the determination at step S505 is negative, the control section 33 performs the process of step S507. At step S507, the control section 33 determines whether an instruction accepted at step S702 is an instruction to conduct an electronic commerce transaction. That is, it is determined whether the instruction inputted by the user is an instruction to purchase a commodity. Herein, a purchase of a commodity is performed only in the case where the determination at step S503 is affirmative and the determination at step S505 is negative, that is, where related information is being displayed on the screen.

If the determination at step S507 is affirmative, the control section 33 performs the process of step S508. That is, at step S508, the control section 33 causes the electronic commerce section 34 to transmit a purchase request for a commodity to the commerce management apparatus 14. Specifically, the control section 33 instructs the electronic commerce section 34 to make a purchase request for a commodity. The electronic commerce section 34, after accepting the instruction from the control section 33, generates a purchase request for a commodity and transmits it to the commerce management apparatus 14 via the communication section 36. The electronic commerce section 34, after completing the transmission to the commerce management apparatus 14, notifies to the control section 33 that the transmission of the purchase request has been completed. At the following step S509, the control section 33, after accepting the notice of the completion of transmission from the electronic commerce section 34, calculates a purchase amount. A purchase amount is a notion including the number of times a commerce transaction (purchase of a commodity) has been conducted and an amount of money for which a commodity was purchased. Note that it is assumed here that the number of times a commerce transaction has been conducted is calculated as the purchase amount. A calculated purchase amount will be utilized in a process described later of calculating a discount amount attributable to a commerce transaction (See step S805). The control section 33, after completing the process of step S509, returns to the process of step S502 again and determines whether any instruction has been accepted from the input section 37.

On the other hand, if the determination at step S507 is negative, the control section 33 performs the process of step S510. Specifically, at step S510, the control section 33 determines whether an instruction accepted at step S502 is an instruction to terminate viewing. That is, it is determined whether the user has made an instruction to terminate the viewing of a program.

If the determination at step S510 is negative, the control section 33, returning to step S501, performs a program data reproduction process again. On the other hand, if the determination at step S510 is affirmative, the control section 33 performs the process of step S511. At step S511, the control section 33 calculates a display amount of related information at step S504. Herein, a display amount of related information is a notion including a period during which related information had been displayed, the number of times related information has been displayed, the number of commodities of which related information was displayed, and the like. Note that it is assumed here that a period during which related information had been displayed is calculated as the display amount. At the following step S512, the control section 33 calculates a viewing period (reproduction period) of a program. Note that the control section 33 transfers the viewing period, the display amount of related information calculated at step S511, and the purchase amount calculated at step S508 to the charging section 35.

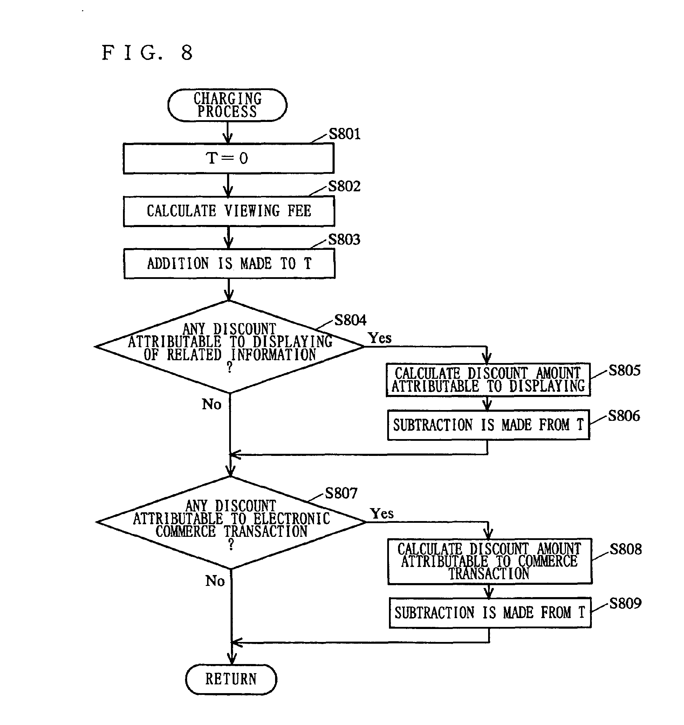

Next, at step S513, the control section 33 performs a charging process. In a charging process at step S513, when a charge amount is calculated, the viewing fee for a program is discounted based on related information outputted on the output section 38 and a purchase request transmitted to the commerce management apparatus 14. With reference to FIG. 8, the charging process is described in detail below.

FIG. 8 is a flowchart illustrating the details of subroutine step S513 in FIG. 5. First, at step S801, in order to initialize a variable T representing a charge amount, the charging section 35 substitutes "0" for T. At the following step S802, the charging section 35 calculates a viewing fee. Specifically, the charging section 35, referring to charge information, calculates a viewing fee based on a viewing period accepted from the control section 33.

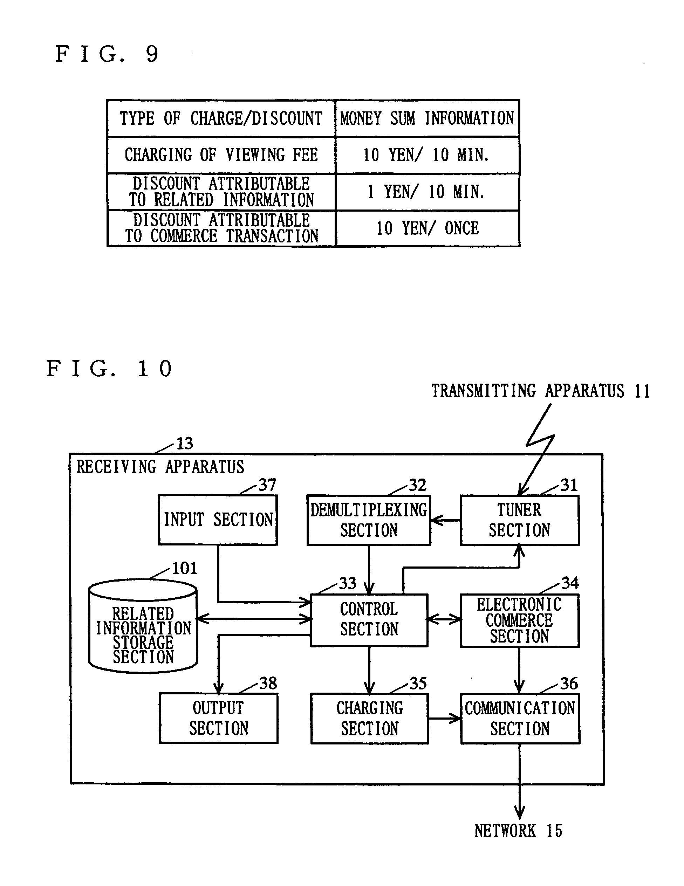

FIG. 9 is a diagram illustrating an example of charge information used in the first embodiment. In charge information, types of charge or discount and money sum information are contained while being associated with each other. Further, in the types of charge or discount, information about a charge of a viewing fee, information about a discount attributable to related information, and information about a discount attributable to a commerce transaction are included. Associated with the information about a charge of a viewing fee is a piece of money sum information, "10 YEN/10 MIN." This shows that if a program has been viewed for ten minutes the charge amount is ten yen. Note that although an example in which a viewing fee is calculated by time is shown in FIG. 9, a viewing fee may be calculated on a program-by-program basis in another example.

In FIG. 9, associated with information about a discount attributable to related information is a piece of money sum information, "1 YEN/ 10 MIN." This shows that if related information has been displayed for ten minutes a viewing fee is discounted by one yen. Note that although an example in which a discount amount attributable to related information is calculated by time is shown in FIG. 9, the discount amount may be calculated with respect to each piece of related information (related information concerning one commodity) or be calculated on the basis of the number of times related information has been displayed, in another example.

In FIG. 9, with information about a discount attributable to a commerce transaction is associated a piece of money sum information, "10 YEN/ ONCE." This shows that if a commerce transaction is conducted once (one commodity is purchased) a viewing fee is discounted by 10 yen. Note that although an example in which a discount amount attributable to a commerce transaction is calculated on the basis of the number of times a commerce transaction has been conducted (number of times a commodity has been purchased) in FIG. 9, the discount amount may be calculated on the basis of the amount for which a commerce transaction was conducted (amount of money for a purchased commodity) in another example. The charging section 35, referring to such charge information as was described above, calculates a charge amount based on the viewing period of a program, the display period of related information, and the number of times a purchase request has been transmitted.

Returning to the description of FIG. 8, at step S803, the charging section 35 performs an adding process. The charging section 35 adds a viewing fee for a program calculated at step S802 to the charge amount T. Note that the value of the charge amount T at the present moment represents a charge amount before a discount is made.

At step S804, the charging section 35 determines whether a discount attributable to the displaying of related information is made. Specifically, the charging section 35 determines whether the display period of related information accepted from the control section 33 is zero, that is, whether the viewer caused related information to be displayed in viewing at this time.

If the determination at step S804 is affirmative (if the display period of related information is not zero), the charging section 35 performs the process of step S805. That is, at step S805, the charging section 35 calculates a discount amount attributable to related information. Specifically, the charging section 35, referring to charge information (information about a discount attributable to related information shown in FIG. 9), calculates the discount amount based on the display period of related information accepted from the control section 33. At the following step S806, the charging section 35 subtracts from the charge amount T the discount amount attributable to related information calculated at step S805. After step S806, the charging section 35 performs the process of step S807.

If the determination at step S804 is negative, the charging section 35 performs the process of step S807. That is, at step S807, the charging section 35 calculates a discount amount attributable to the commerce transaction. Specifically, the charging section 35, referring to charge information (information about a discount attributable to a commerce transaction shown in FIG. 9), calculates the discount amount based on the number of times of commerce transactions conducted which was accepted from the control section 33. At the following step S808, the charging section 35 subtracts the discount amount attributable to the commerce transaction calculated at step S807 from the charge amount T. Thereafter, the charging section 35 finishes the charging process.

On the other hand, if the determination at step S808 is negative, the charging section 35 finishes the charging process. By the above steps S801 to S810, the charging process is completed.

Returning to the description of FIG. 5 again, at step S514, the charging section 35 transmits the charge amount T calculated at step S513 to the transmitting apparatus 11 via the communication section 36. Note that in the present embodiment, in addition to the charge amount, user information is transmitted. User information is information including information of a discount amount (the sum total of a discount amount attributable to related information and a discount amount attributable to a commerce transaction). Besides, in user information, a display period of related information or the number of times of commerce transactions may be included, or information of a commodity that has been displayed as related information, information as to a commodity for which a commerce transaction was conducted, or the like may be included. Thus, processes in the receiving apparatus 13 are completed.

Next, a process in the transmitting apparatus 11, which has accepted a charge amount from the receiving apparatus 13, is described. A charge amount and user information transmitted from the receiving apparatus 13 is received at the communication section 24 and transferred to the sponsor fee calculating section 25. Thus, the charge amount for a viewer can be known at the side of the transmitting apparatus, and a broadcaster can perform the collection of a viewing fee.

The sponsor fee calculating section 25 calculates a sponsor fee based on the accepted user information. A sponsor fee is decided, for example, according to a discount amount. More specifically, the sponsor fee calculating section 25 may utilize the discount amount itself as a sponsor fee. Moreover, in the case where a display amount of related information (a display period or the number of times of displaying) and the amount of commerce transactions (the number of times or amount of money) are included in user information, for example, a sponsor fee may vary according to the ratio of the amount of commerce transactions to the display amount of related information. In other words, the sponsor fee calculating section 25 may calculate a sponsor fee such that a sponsor fee will be larger when the ratio of a purchase amount to a display amount is high than when the ratio is low.

As shown above, according to the present embodiment, a reduction from a viewing fee is made by a user displaying related information or conducting an electronic commerce transaction in viewing a program, so that the financial burden on the user can be lessen. Thus, in addition to a user's utilization of fee-requiring broadcasting being promoted, the commodity advertising/sales effectiveness of the commerce management apparatus 14 can be enhanced, and as the utilization of fee-requiring broadcasting is promoted, the profit on the transmitting apparatus 11 can be increased.

In the present embodiment, the receiving apparatus 13 transmits the total charge amount and user information to the transmitting apparatus 11. However, the total charge amount may be transmitted to the transmitting apparatus 11 and user informationmaybe transmittedto the commerce management apparatus 14.

It was assumed in the present embodiment that the total charge amount calculated in the receiving apparatus 13 is calculated every time the viewing of a program is finished and is transmitted to the transmitting apparatus 11. However, the charge amount totalized at predetermined intervals such as two weeks or one month may be transmitted to the transmitting apparatus 11. Thus, the present invention can be applied not only to a PPV (Pay Per View) contract, according to which a viewing fee is paid for each program, but also to a form in which a monthly payment is made for each channel, and the like.

In the present embodiment, the transmission of a charge amount and the like from the receiving apparatus 13 to the transmitting apparatus 11 is performed via the network 15. Herein, in another embodiment, it may be so arranged that the notice of a charge amount from the receiving apparatus 13 to the transmitting apparatus 11 is notified to the transmitting apparatus 11 by utilizing an IC card. In this case, the receiving apparatus 13 is required to include a component that is capable of reading and writing into an IC card. The settlement of an account utilizing an IC card is realized by writing a charge amount into the IC card instead of the charge amount being transmitted to the transmitting apparatus 11 after the charge amount is calculated by the charging process. Thereafter, a viewer brings the IC card into which the charge amount has been written to a facility (for example, a convenience store or the like) in which a terminal that is capable of communicating with the transmitting apparatus 11 exists, and causes the terminal to read the information of the charge amount written into the IC card. Thus, the transmitting apparatus 11 can obtain the information of the charge amount from the terminal. Note that, even in viewing a program and related information with a receiving apparatus other than a receiving apparatus 13 that is usually used, it becomes possible by utilizing an IC card in settling an account that a viewer views the program and related information in the same manner as with the receiving apparatus 13 that is usually used.

In the present embodiment the calculation of a charge amount is performed by the receiving apparatus. However, it may be so arranged that the transmitting apparatus 11 performs the calculation of the charge amount. In this case, the receiving apparatus 13 transmits the viewing period of a program, the display amount of related information, and the purchase amount to the transmitting apparatus 11. At the transmitting apparatus 11, charge information is previously set. Then, the transmitting apparatus 11, referring to the charge information, calculates the total charge amount based on the viewing period of a program, display amount, and purchase amount that have been transmitted from the receiving apparatus 13.

### (second embodiment)

The second embodiment is described below. As described above, in the first embodiment, related information contained in a program is executed during the time when the program is being reproduced. As compared with this, in the second embodiment, the receiving apparatus 13 is equipped with a related information storage section 101. The receiving apparatus 13, by storing a related information program in the related information storage section 101, can call the related information program and cause related information to be displayed whenever a user wants. With reference to FIG. 9 to FIG. 10, the second embodiment is described below. Note that a video information charging system according to the second embodiment is identical to that of the first embodiment except for the structure of the receiving apparatus 13 and its operation. Therefore, in the following description, only the differences between the first embodiment and the second embodiment are described, and the description concerning points of which the description would be the same as in the first embodiment is omitted.

FIG. 10 is a block diagram illustrating the functional structure of the receiving apparatus 13 according to the second embodiment. In FIG. 10, the receiving apparatus 13 includes the control section 33, the tuner section 31, the demultiplexing section 32, the charging section 35, the electronic commerce section 34, the communication section 36, the input section 37, the output section 38, and the related information storage section 101. The receiving apparatus 13 illustrated in FIG. 10 is different from that in FIG. 3 in that the receiving apparatus 13 is equipped with the related information storage section 101. Since the other aspects are the same as in FIG. 3, components in FIG. 10 that correspond to those in FIG. 3 are attached with the same numerical numbers, and the descriptions thereof are omitted.

The related information storage section 101 stores a related information program accepted from the control section 33. The related information storage section 101 is composed of a storage device such as a RAM or the like that the receiving apparatus 13 has. The control section 33, according to an instruction from a viewer, causes the related information storage section 101 to store a related information program accepted from the demultiplexing section 32. Moreover, if an instruction to display the related information is given by the viewer, the control section 33 executes the related information program that accords with the instruction, out of the related information stored in the related information storage section 101.

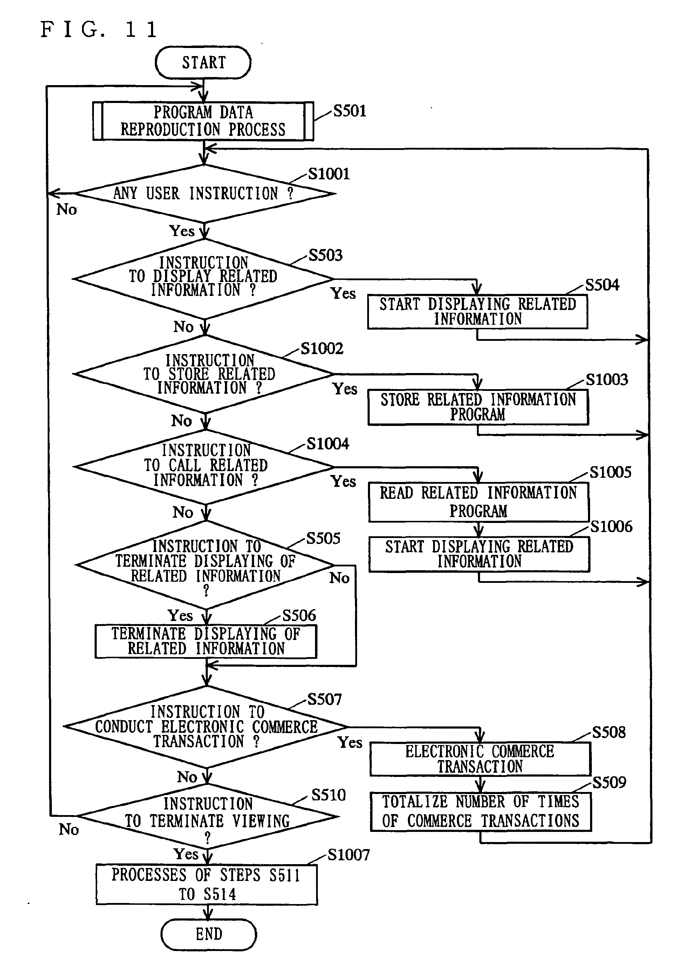

FIG. 11 is a flowchart illustrating the operation of the receiving apparatus 13 according to the second embodiment. Note that, in FIG. 11, the same processes as those in FIG. 5 are attached with the same numerical numbers and the descriptions thereof are omitted.

At step S1001, which is carried out after step S501, the control section 33 determines whether an instruction inputted to the input section 37 by the user has been accepted. Herein, there are six types of instructions that the control section 33 may receive at step S1001, that is: the four types identical to those in the first embodiment (an instruction to display related information, an instruction to terminate the display of related information, an instruction to purchase a commodity, and an instruction to terminate the viewing of a program) plus two more types, that is, an instruction to store a related information program and an instruction to call a related information program.

If the determination at step S503 is negative, the process of step S1002 is performed. That is, at step S1002, the control section 33 determines whether an instruction to store a related information program has been accepted. If the determination at step S1002 is affirmative, the process proceeds to step S1003. On the other hand, if the determination at step S1002 is negative, the process proceeds to step S1004.

At step S1003, the control section 33 stores the related information program. Specifically, the control section 33 stores a related information program that is currently being executed (of which the related information is being displayed) in the related information storage section 101. Following step S1003, the control section 33 performs the process of step S1001.

At step S1004, the control section 33 determines whether an instruction accepted at step S1001 is an instruction to call a related information program. If the determination at step S1004 is affirmative, the process proceeds to step S1005. On the other hand, if the determination at step S1004 is negative, the process proceeds to step S505.

At step S1005, the control section 33 reads a related information program stored in the related information storage section 101. At the following step S1006, the control section 33 executes the related information program read at step S1005 and causes the output section 38 to display related information.

The processes of steps S505 to 514, which follow, are the same as the processes of steps S507 to S709 in FIG. 5. Note that at step S1007 shown in FIG. 11, the processes of step S511 to 514 in FIG. 5 are performed.

As described above, according to the present embodiment, it becomes possible by storing a related information program in the related information storage section 101 to cause related information related to a program that is not currently being reproduced to be displayed. Therefore, it becomes possible for a user to cause stored related information to be displayed whenever he or she wants to or conduct an electronic commerce transaction involving it. In addition, opportunities of a charge amount being discounted will increase.

### INDUSTRIAL APPLICABILITY

As described above, the video information charging system according to the present invention makes it possible to reduce the burden of a viewing fee without distracting a viewer' s interest.

## Claims

1. A video information charging system in which a fee-requiring program is broadcast from a transmitting apparatus to a receiving apparatus and a communication concerning an electronic commerce transaction for a commodity that appears in the program is performed between the receiving apparatus and a commerce management apparatus, comprising:
a related program acquiring section for acquiring a related program for making a display concerning a commodity that appears in the program and conducting an electronic commerce transaction for the commodity;
a program transmitting section for transmitting a related program acquired by the related program acquiring section, the related program being included in data of the program to be broadcast, to the receiving apparatus;
a program receiving section for receiving the data of the program that is transmitted from the program transmitting section;
a reproducing section for reproducing the data of the program received by the program receiving section;
a related image display section for, in accordance with an instruction from a viewer, executing the related program contained in the data of the program received by the program receiving section and thereby making a display concerning the commodity that appears in the program;
a purchase request section for, in accordance with an instruction from the viewer, executing the related program contained in the data of the program received by the program receiving section and thereby transmitting a purchase request for the commodity displayed by the related image display section to the commerce management apparatus; and
a charge management section for discounting a charge amount to be charged for the program when calculating the charge amount for the program, based on the display concerning the commodity displayed by the related image display section and the purchase request transmitted by the request transmitting section.

2. The video information charging system according to claim 1, further comprising:
a sponsor fee calculating section for calculating a sponsor fee based on an amount of discount applied by the charge management section; and
a sponsor fee transmitting section for transmitting data indicating the sponsor fee calculated by the sponsor fee calculating section to the commerce management apparatus.

3. The video information charging system according to claim 2, further comprising
a display amount calculating section for calculating, as a display amount, an amount of display concerning the commodity having been made by the related image display section, and
a purchase amount calculating section for calculating, as a purchase amount, an amount of purchase requests having been transmitted by the request transmitting section, wherein
if a ratio of the purchase amount to the display amount is high, the sponsor fee calculating section calculates a sponsor fee such that the sponsor fee becomes larger than when the ratio is low.

4. The video information charging system according to claim 1, further comprising a related program storage section for storing the related program contained in the data of the program received by the program receiving section, wherein
the related image display section, in accordance with an instruction from the viewer, executes the related program stored in the related program storage section and thereby makes a display concerning the commodity that appears in the program, and
the purchase request section, in accordance with an instruction from the viewer, executes the related program stored in the related program storage section and thereby transmits the purchase request for the commodity displayed by the related image display section to the commerce management apparatus.

5. A video information receiving apparatus for receiving a fee-requiring program broadcast from a transmitting apparatus and performing a communication concerning an electronic commerce transaction for a commodity that appears in the program with a commerce management apparatus,
wherein a related program for making a display concerning the commodity that appears in the program and conducting an electronic commerce transaction for the commodity is contained in data of the program that is transmitted from the transmitting apparatus,
the receiving apparatus comprising:
a program receiving section for receiving the data of the program that is transmitted from the transmitting apparatus;
a reproducing section for reproducing the data of the program received by the program receiving section;
a related image display section for, in accordance with an instruction from the viewer, executing the related program contained in the data of the program received by the program receiving section and thereby making a display concerning the commodity that appears in the program;
a purchase request section for, in accordance with an instruction from the viewer, executing the related program contained in the data of the program received by the program receiving section and thereby transmitting a purchase request for the commodity displayed by the related image display section to the commerce management apparatus; and
a charge management section for discounting a charge amount to be charged for the program when calculating the charge amount for the program, based on the display concerning the commodity displayed by the related image display section and the purchase request transmitted by the request transmitting section.

6. A video information charge method used in a video information charging system in which a fee-requiring program is broadcast from a transmitting apparatus to a receiving apparatus and a communication concerning an electronic commerce transaction for a commodity that appears in the program is performed between the receiving apparatus and a commerce management apparatus, the method comprising:
a related program acquiring step of acquiring a related program for making a display concerning the commodity that appears in the program and conducting an electronic commerce transaction for the commodity;
a program transmitting step of transmitting the related program acquired at the related program acquiring step, the related program being included in data of the program to be broadcast, to the receiving apparatus;
a program receiving step of receiving the data of the program transmitted at the program transmitting step;
a reproducing step of reproducing the data of the program received at the program receiving step;
a related image display step of, in accordance with an instruction from a viewer, executing the related program contained in the data of the program received at the program receiving step and thereby making the display concerning the commodity that appears in the program;
a purchase request step of, in accordance with an instruction from the viewer, executing the related program contained in the data of the program received at the program receiving step and thereby transmitting a purchase request for the commodity displayed at the related image display step to the commerce management apparatus; and
a charge management step of discounting a charge amount to be charged for the program when calculating the charge amount for the program, based on the display concerning the commodity displayed at the related image display step and the purchase request transmitted at the request transmitting step.
